# EUROPEAN PATENT APPLICATION

(11) **EP 4 635 801 A1**
(43) Date of publication of application: **22.10.2025**
(21) Application number: 24170347.9
(22) Date of filing: 15.04.2024
(51) Int. Cl.: B60R 11/04

(54) **VISION SYSTEM FOR A VEHICLE**

(71) Applicant: Motherson Innovations Deutschland GmbH, 70327 Stuttgart (DE)
(72) Inventor: Szilágyi, Csaba, 70327 Stuttgart (DE)

(57) **Abstract**

The present disclosure provides a vision system (114) for a vehicle (100). The vision system includes at least one image capturing module (118) to capture image data of a surrounding environment of the vehicle within a field of view (FOV1; FOV2) of the at least one image capturing module. Further, the vision system includes a mounting bracket (204) mounted to an interior portion (206) of at least one support structure (112), and at least one display interface (116) mounted to the mounting bracket. The at least one display interface is located within a cabin (102) and oriented in a field of vision of a driver (224). The vision system further includes a control circuitry (214). The control circuitry renders the image data of the surrounding environment of the vehicle on the at least one display interface in real-time.

## Description

The present disclosure relates to a vehicle, and more particularly relates, to a vision system for a vehicle.

Vehicles such as commercial vehicles, Heavy Tactical Vehicles (HTVs) and cars, are usually equipped with rearview mirrors (*e.g*., lateral mirrors) on the exterior of the vehicles within the driver's field of vision. Lateral mirrors play a crucial role in enhancing driver visibility and safety, especially in activities such as lane changing, merging, or navigating through traffic. They are essential for detecting vehicles approaching from the side and rear, reducing blind spots, and improving overall situational awareness for the driver. However, the visibility of the lateral mirrors is affected by environmental conditions such as dust and moisture. Additionally, quickly discerning the surrounding environment from the mirror images can be challenging at a glance.

Mirror replacement systems are used to detect the surrounding environment of the vehicle in real-time. The mirror replacement systems may include image sensors mounted on the exterior of the vehicle and a display unit mounted within the driver's cabin generally proximate to an A-pillar structure of the vehicle. The A-pillar structure may block a part of the field of vision of the mirror replacement systems and the conventional mirrors, thus creating a blind spot. This introduces safety risks while maneuvering the vehicle (*e.g*., when turning the vehicle). Even though the display imaging is rendered on the display unit of the mirror replacement system, the observation and the actual surrounding environment may include a line of sight deviation due to an occlusion created by the A-pillar structure. This may bring inconvenience to the driver by hindering a clear view of the vehicle's surroundings and exposing hidden dangers to safe driving. Moreover, the installation of the mirror replacement systems inside the driver's cabin can be challenging due to the space constraints in the vehicle.

Therefore, there is a need for an efficient mounting of mirror replacement systems in the vehicle that addresses safety concerns, overcoming the aforementioned limitations in addition to providing other technical advantages.

In order to solve the foregoing problem and to provide other advantages, one aspect of the present disclosure is to provide a vision system for a vehicle. The vision system includes at least one image capturing module mounted at one or more locations of a body frame of the vehicle. The at least one image capturing module is configured to capture image data of a surrounding environment of the vehicle within a field of view of the at least one image capturing module. Further, the vision system includes a mounting bracket mounted to an interior portion of at least one support structure located at a front portion of the vehicle, and at least one display interface removably mounted to the mounting bracket. The at least one display interface is located within a cabin of the vehicle and oriented in a field of vision of a driver of the vehicle. The vision system further includes a control circuitry communicably coupled to the at least one display interface and the at least one image capturing module. The control circuitry is configured to at least render the image data of the surrounding environment of the vehicle on the at least one display interface in real-time.

An advantage of various embodiments is to provide a fixture assembly including the mounting bracket and the at least one display interface. The at least one display interface is mounted to the A-pillar structures (or the support structures) of the vehicle which ensures efficient usage of space inside the cabin and reduces the carbon footprint for the vehicle. Further, mounting the at least one display interface to the A-pillar structures enhances direct vision of the front environment of the vehicle to the driver.

In an aspect, the at least one support structure located at the front portion of the vehicle includes an A-pillar structure. The A-pillar structure extends obliquely in a rearward and upward direction from the body frame of the vehicle. This provides a better aerodynamics to the vehicle and in turn less CO2 footprint for the vehicle. Additionally, this also brings more safety in terms of a direct view to the driver.

In an aspect, the vision system includes a shield member. The shield member is mounted to the at least one support structure and located outwardly in the vehicle, thereby encasing an exterior portion of the at least one support structure and the at least one display interface secured to the mounting bracket. This prevents exposure of the at least one display interface to the environmental conditions (such as dust, moisture, etc.).

In an aspect, the at least one display interface is located at a lower end of the at least one support structure.

In an aspect, the mounting bracket is a structural element of the at least one support structure of the vehicle.

In an aspect, the one or more locations of the body frame for mounting the at least one image capturing module are a right side wall at the front portion, a left side wall at the front portion, and the at least one support structure.

In an aspect, the control circuitry of the vision system is secured to at least one of an interior portion of the one or more side walls of the body frame and the at least one support structure.

In an aspect, the at least one support structure includes an A-pillar structure, a B-pillar structure, a C-pillar structure, a roof, and a door.

In an aspect, the at least one image capturing module includes a first image capturing module and a second image capturing module. The first image capturing module and the second image capturing module are mounted to the exterior portion of the right side wall and the left side wall, respectively. Further, the first image capturing module and the second image capturing module are configured to capture the image data of a right rearward view and a left rearward view, respectively, of the surrounding environment of the vehicle.

In an aspect, the at least one display interface includes a first display interface and a second display interface secured to the mounting bracket. Further, an assembly of the mounting bracket and the first display interface is mounted to a right support structure of the at least one support structure, and an assembly of the mounting bracket and the second display interface is mounted to a left support structure of the at least one support structure.

In an aspect, the control circuitry is configured to at least render the image data of the right rearward view and the left rearward view of the surrounding environment of the vehicle on the first display interface and the second display interface, respectively. This provides better visualization of the surrounding environment (*i.e*., the left rearward view and the right rearward view) of the vehicle to the driver of the vehicle.

In an aspect, the at least one display interface is connected to the at least one image capturing module and the control circuitry via one or more conductive interfaces routed through at least one slot (304) configured in the mounting bracket.

In an aspect, the at least one slot of the mounting bracket is sealed using a sealant material to form a fluid sealed connection. This ensures secure routing of the conductive interfaces of the vision system in the vehicle.

In an aspect, the at least one display interface secured to the mounting bracket is mounted to the interior portion of the at least one support structure using one or more fastening members. The one or more fastening members are insertable through a corresponding slot configured in the at least one support structure and removably secured to the mounting bracket.

In an aspect, the vision system further includes a control circuitry communicably coupled to the first image capturing module and the first display interface. The control circuitry is configured to generate the image data of the right rearward view being captured by the first image capturing module and render the image data of the right rearward view on the first display interface. The vision system includes another control circuitry communicably coupled to the second image capturing module and the second display interface. The control circuitry is configured to generate the image data of the left rearward view being captured by the second image capturing module and render the image data of the left rearward view on the second display interface.

In an aspect, the control circuitry communicably coupled to the at least one display interface and the at least one image capturing module, wherein the control circuitry configured to render image data captured by the at least one image capturing module of the vehicle on the at least one display interface in real-time.

The foregoing summary is illustrative only and is not intended to be in any way limiting. In addition to the illustrative aspects, embodiments, and features described above, further aspects, embodiments, and features will become apparent by reference to the drawings and the following detailed description.

The following detailed description of illustrative embodiments is better understood when read in conjunction with the appended drawings. To illustrate the present disclosure, exemplary constructions of the disclosure are shown in the drawings. However, the present disclosure is not limited to a specific device, or a tool and instrumentalities disclosed herein. Moreover, those in the art will understand that the drawings are not to scale.
FIG. 1 illustrates a perspective view of a vehicle, in accordance with an embodiment of the present disclosure;
FIGS. 2A and 2B illustrate a cross-sectional view of a cabin of the vehicle along a cross-sectional axis A-A', in accordance with an embodiment of the present disclosure;
FIG. 3 illustrates a sectional view of the cabin depicting an assembly of a mounting bracket and at least one display interface mounted to a right support structure, in accordance with an embodiment of the present disclosure;
FIG. 4 illustrates a schematic representation of the cabin depicting image data rendered on the at least one display interface, in accordance with an embodiment of the present disclosure; and
FIG. 5 illustrates a simplified block diagram representation of a control circuitry, in accordance with an embodiment of the present disclosure.

The drawings referred to in this description are not to be understood as being drawn to scale except if specifically noted, and such drawings are only exemplary in nature.

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

While the present invention is illustrated in the context of a four-wheeled vehicle, however, holding structure and aspects and features thereof can be used with other types of vehicles such as a two-wheeled vehicle, three-wheeled vehicle, six-wheeled vehicle, eight-wheeled vehicle, etc. as well. In illustrated embodiments, it is to be noted that terms such as "four-wheeled vehicle" and "vehicle" are interchangeably used throughout the description.

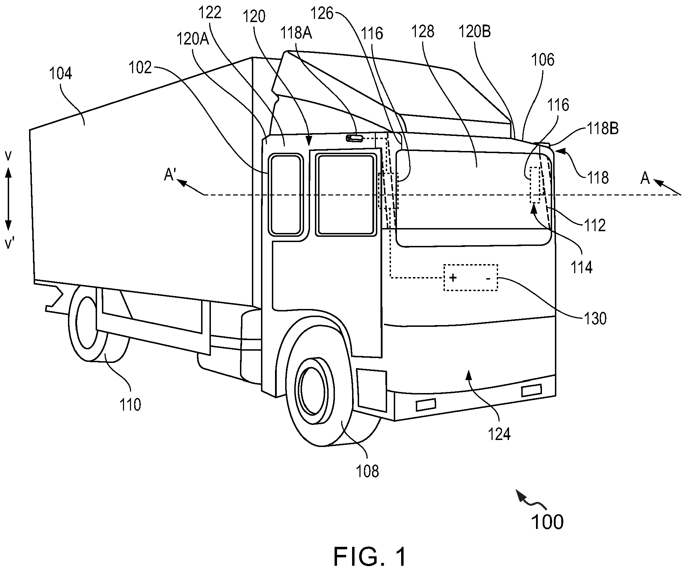

Various example embodiments of the present disclosure are described hereinafter with reference to FIG. 1 to FIG. 5.

FIG. 1 illustrates a perspective view of a vehicle 100, in accordance with an embodiment of the present disclosure. The vehicle 100 referred to herein embodies a four-wheeled vehicle (such as a commercial vehicle). Alternatively, the vehicle 100 may embody other vehicles such as two-wheeled vehicles, three-wheeled vehicles, six-wheeled vehicles, eight-wheeled vehicles, all-terrain vehicles (ATVs), *etc.,* without limiting the scope of the invention.

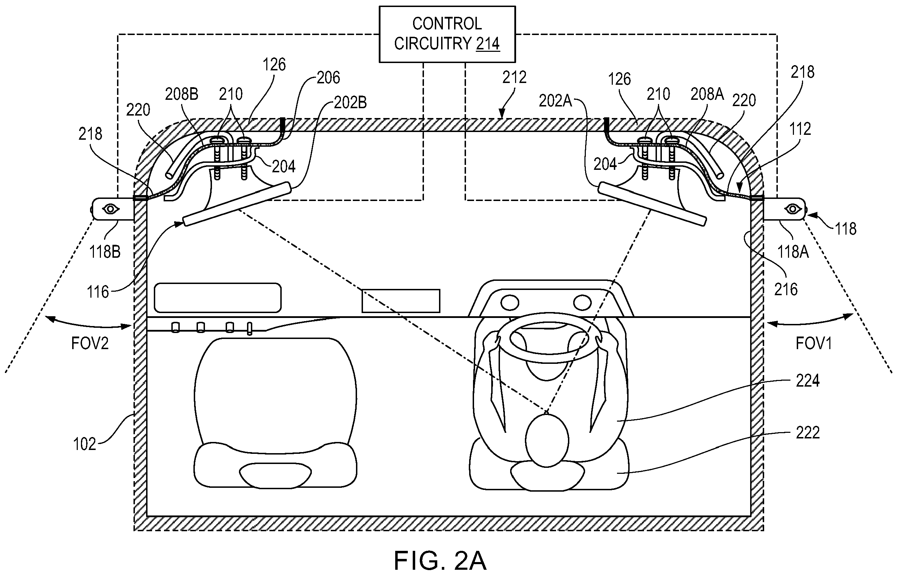

The vehicle 100 includes a vehicle cabin 102 and a trailer 104. The vehicle cabin 102 includes a driver seat *(see,* 222 of FIG. 2A) for providing seating for a driver. In addition, the vehicle cabin 102 may include at least one passenger seat (*not shown in Figures*) for providing seating to a passenger. The vehicle 100 further includes a body frame 106. The body frame 106 corresponds to a chassis of the vehicle 100. The body frame 106 is configured to be robust enough to withstand heavy loads, rough terrain, and different operating conditions while maintaining stability, handling, and control.

The body frame 106 (or the chassis) is the structural framework for supporting one or more components of the vehicle 100. The one or more components of the vehicle 100 may include, but are not limited to, power unit, transmission, suspension, steering assembly, and the like. In one embodiment, the power unit of internal combustion (IC) engine based vehicle 100 includes an engine unit and a transmission unit. In another embodiment, the power unit of an electric based vehicle 100 includes a motor and the transmission unit. In an illustrated example, the power unit provides the necessary power required to drive rear wheels *(see,* 110 of FIG. 1) of the vehicle 100. Alternatively, the power unit may provide the necessary power to drive front wheels *(see,* 108 of FIG. 1), or both the front wheels 108 and the rear wheels 110 simultaneously, without limiting the scope of the invention. Further, the body frame 106 includes at least one support structure *(see,* 112 of FIG. 1). The support structures 112 (or pillar structures) refer to the vertical supports that are integral components of the body frame 106. The pillar structures are essential for maintaining the structural integrity of the chassis (or the body frame 106) and ensuring the overall safety and durability of the vehicle 100.

Further, the vehicle 100 includes a vision system 114. The vision system 114 generally provides real-time monitoring and control of various vehicle systems and functions. In particular, the vision system 114 is commonly used in modern trucks and commercial vehicles, thus offering drivers a centralized interface to manage critical vehicle information and settings. The vision system 114 includes at least one display interface 116 and at least one image capturing module 118. The at least one display interface 116 is mounted within the cabin 102 or inside the vehicle 100. The at least one display interface 116 may include a light-emitting diode (LED) display, a thin-film transistor (TFT) display, a liquid crystal display (LCD), an active-matrix organic light-emitting diode (AMOLED) display, and the like. Further, the image capturing modules 118 are mounted at one or more locations of the body frame 106 of the vehicle. Some non-limiting examples of the image capturing modules 106 may include CCD (Charge-Coupled Device) and CMOS (Complementary Metal-Oxide-Semiconductor) sensors. Depending upon the application, the image capturing modules 118 may feature protective measures such as waterproofing, dustproofing, or shock resistance to withstand harsh environmental conditions.

In one scenario, the image capturing modules 118 are mounted to one or more side walls 120 of the body frame 102 of the vehicle 100. The image capturing modules 118 include a first image capturing module 118A and a second image capturing module 118B. The first image capturing module 118A and the second image capturing module 118B are mounted to an exterior portion 122 of a right side wall 120A and a left side wall 120B of the one or more side walls 120. The image capturing modules 118 (*i.e.,* the first image capturing module 118A and the second image capturing module 118B) are configured to capture image data of a surrounding environment (*e.g.,* left rearward view image data and a right rearward view image data) of the vehicle 100 within a field of view (FOV) of the image capturing modules 118. In another scenario, the image capturing modules 118 may be mounted to the support structures 112. Thus, it is understood that the vision system 114 supports camera feeds from the imaging modules 118. This provides a view of blind spots, cargo areas, or rear areas of the vehicle 100 which will be explained further in detail.

The vehicle 100 may include a power source 130. The power source 130 may include a rechargeable battery that serves as the primary power source for starting the power unit, providing electricity to the vehicle's electrical system, and power various components such as lights, radio, power windows, and other electrical accessories. It may be noted that the vehicle 100 is shown to have included the above-stated parts, however, those skilled in the art would appreciate that the vehicle 100 includes other parts which may not be relevant for explaining the present invention and hence are not shown and described.

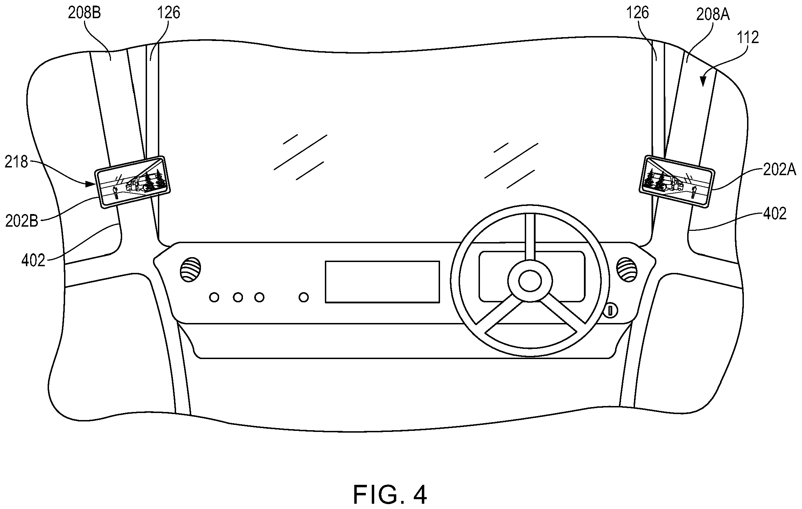

FIG. 2A illustrates a cross-sectional view of the cabin 102 of the vehicle 100 along a cross-sectional axis A-A', in accordance with an embodiment of the present disclosure. As shown, the at least one display interface 116 includes a first display interface 202A and a second display interface 202B mounted to the respective support structures 112 (*e.g*., A-pillar structures). The at least one display interface 116 is located at a lower end *(see,* 402 of FIG. 4) of the at least one support structure 112. In particular, each of the first display interface 202A and the second display interface 202B are assembled on a mounting bracket 204 using conventional mounting means. The conventional mounting means may include, but are not limited to, screws, rivets, adhesives, snap-fit arrangement, and the like.

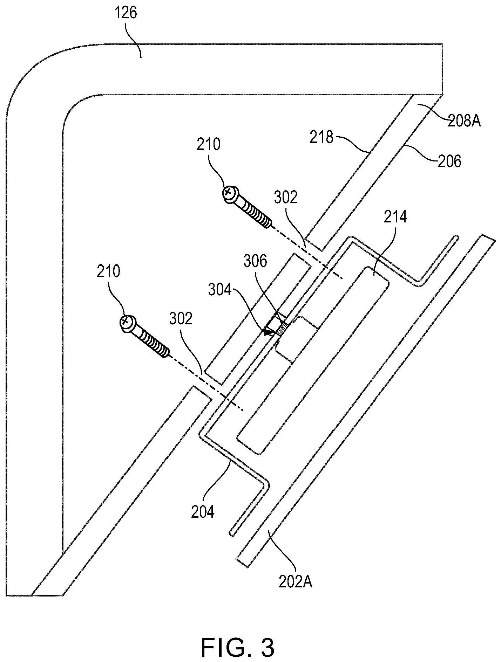

Thereafter, an assembly of the mounting bracket 204 and the first display interface 202A and an assembly of the mounting bracket 204, and the second display interface 202B are mounted to an interior portion 206 of the respective support structures 112 using one or more fastening members 210 (*e.g*., screws, rivets, anchor bolts, etc.). The fastening members 210 are insertable through a corresponding slot *(see,* 302 of FIG. 3) configured in the at least one support structure 112 and is removably secured to the mounting bracket 204. In an embodiment, while assembling the fastening members 210 the first display interface 202A and/or second display interface 202B are inserted through the support structures 112 from the outside of the vehicle (100). This enables mounting an assembly of the at least one display interface 116 and the mounting bracket 204 to the interior portion 206 of the at least one support structure 112.

In particular, the support structures 112 include a right support structure 208A and a left support structure 208B. For example, the right and left support structures 208A and 208B are A-pillar structures. It should be noted that the support structures 112 *(i.e.,* A-pillar structures) are located at a front portion 212 of the vehicle 100. Further, the support structures 112 (or the A-pillar structures) extend obliquely in a rearward and upward direction from the body frame 102 of the vehicle 100. In other words, the A-pillar structures (i.e., the support structures 112) are tilted inwardly towards the cabin 102 of the vehicle 100. This provides a better aerodynamics to the vehicle 100 and in turn less carbon (CO2) footprint for the vehicle 100. Additionally, this also ensures better safety in terms of a direct view to the driver. Furthermore, the assembly of the first display interface 202A and the mounting bracket 204 is mounted to the interior portion 206 of the right support structure 208A, and the assembly of the second display interface 202B and the mounting bracket 204 is mounted to the interior portion 206 of the left support structure 208B. Thus, it is evident that the at least one display interface 116 is mounted in the vehicle's cabin 102.

In an embodiment, the mounting bracket 204 may be a structural element of the A-pillar structure *(i.e.,* the at least one support structure 112) of the vehicle 100. In one embodiment, the assembly of the mounting bracket 204 and the at least one display interface 116 may be mounted to a B-pillar structure and a C-pillar structure. The B-pillar structure, the C-pillar structure, the roof and the door correspond to the support structure 112. In another embodiment, the at least one display interface 116 may be mounted (directly) to the interior portion 206 of the support structures 112. In still another embodiment, the mounting bracket (204) is at least partly covering back portion of the at least one display interface (116). In still another embodiment, at least some part of the mounting bracket (204) may act as a back cover portion of the at least one display interface (116). For illustration purposes, the vision system 100 is depicted to include only two display interfaces (such as the display interfaces 116) and two image capturing modules (such as the image capturing modules 118). However, the vision system 100 may include any number of image capturing modules and display interfaces as per the design feasibility and requirements.

Additionally, the vision system 100 includes a shield member *(see,* 126 of FIG. 1). The shield member 126 is mounted to the at least one support structure 112 and located outwardly in the vehicle 100. This encases an exterior portion *(see,* 218) of the at least one support structure 112 (or the right and left support structures 208A and 208B) and the at least one display interface 116 secured to the mounting bracket 204. The shield member 126 mounted to the exterior portion 218 of the at least one support structure 112 is oriented parallel to a vertical plane (V-V') of the vehicle 100. This enables a direct vision of the driver through a windshield *(see,* 128 of FIG. 1) of the vehicle 100. It should be noted that the shield member 126 is secured to the support structures 112 from outside of the vehicle 100. The shield member 126 is dimensioned in conformity to the support structures 112 for enclosing the at least one display interface 116. In an embodiment, the shield member 126 may be dimensioned to include an orthogonal profile. Alternatively, the shield member 126 may be configured in any other structural configurations as per the design feasibility and requirements. The shield member 126 may be made of plastic materials, aluminum, or any other materials as per the design feasibility and requirements.

The vision system 114 further includes a control circuitry 214. The control circuitry 214 includes a printed circuit board (PCB), or any logic, circuitry, and/or interfaces to perform one or more operations described herein. In one scenario, the control circuitry 214 may be disposed in a space between the interior portion 206 of one of the support structures 112 and the at least one display interface 116 (as shown in FIG. 3). In another scenario, the control circuitry 214 may be secured to an interior portion 216 of the side walls 120. In yet another scenario, the control circuitry 214 may be mounted to the at least one support structure 112. For illustration purposes, the control circuitry 214 is depicted outside of the vehicle 100. Further, the control circuitry 214 is operatively coupled to the at least one image capturing module 118 and the at least one display interface 116. In other words, the control circuitry 214 connects the at least one image capturing module 118 with the at least one display interface 116. It is to be noted that the at least one display interface 116 is connected to the at least one image-capturing module 118 and the control circuitry 214 via one or more conductive interfaces *(see,* 220). Some non-limiting examples of the conductive interfaces 220 are the CAN (Controller Area Network) interface, electrical wires, etc.

Moreover, the at least one image capturing module 118 and the at least one display interface 116 are connected using the one or more conductive interfaces 220. In particular, the one or more conductive interfaces 220 may be routed through at least one slot *(see,* 304 of FIG. 3) of the mounting bracket 204 for connecting the at least one image capturing module 118 and the at least one display interface 116. The at least one slot 304 is sealed using a sealant material *(see,* 306 of FIG. 3) to form a fluid sealed connection. The sealant material 306 may be epoxy resin. Alternatively, the sealant material 306 may be a Butyl rubber, silicone or any other material as per the requirements.

In operation, the at least one image capturing module 118 captures the image data of the surrounding environment of the vehicle 100 within a field of view (FOV) of the at least one image capturing module 118. As explained above, the at least one image capturing module 118 includes the first image capturing module 118A and the second image capturing module 118B mounted to the exterior portion 122 of the right side wall 120A and the left side wall 120B, respectively. The first image capturing module 118A is configured to capture the image data of a right rearward view within the field of view (exemplarily represented as 'FOV 1') of the first image capturing module 118A. The second image capturing module 118B is configured to capture the image data of a left rearward view within the field of view (exemplarily represented as 'FOV2') of the second image capturing module 118B.

In an embodiment, the image capturing modules 118 may be mounted to a rear portion of the vehicle 100 for capturing the image data of a rear view of the vehicle 100. In some embodiments, the image capturing modules 118 may be mounted inside the cabin 102, a middle portion *(see,* 124 of FIG. 1) of the vehicle 100 based on the design feasibility and requirements.

Referring to FIG. 4 in conjunction with FIG. 2A, the control circuitry 214 renders the image data of the surrounding environment of the vehicle 100 on the at least one display interface 116 in real-time. In an embodiment, the control circuitry 214 may be a centralized control unit (or a single unit) communicably coupled to the first image capturing module 118A and the second image capturing module 118B, and the corresponding first display interface 202A and the second display interface 202B. In this scenario, the control circuitry 214 generates the image data of the right rearward view and the left rearward view being captured by the first image capturing module 118A and the second image capturing module 118B. In other words, the control circuitry 214 may include an image processor(s) for processing electrical signals from the first image capturing module 118A and the second image capturing module 118B to produce the image data of the right rearward view and the left rearward view, respectively. Thereafter, the control circuitry 214 renders the image data of the right rearward view and the left rearward view of the surrounding environment on the first display interface 202A and the second display interface 202B, respectively.

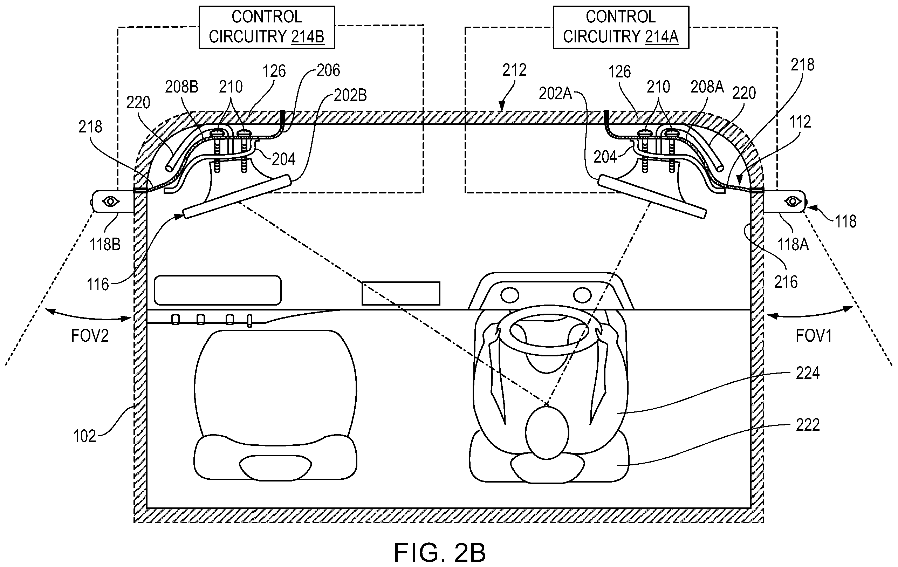

In another embodiment, the vision system 114 may include two control circuitry such as a control circuitry 214A and a control circuitry 214B (as shown in FIG. 2B). The control circuitry 214A may be communicably coupled to the setup of the first image capturing module 118A and the first display interface 202A (as shown in FIG. 2B). The control circuitry 214B may be communicably coupled to the setup of the second image capturing module 118B and the second display interface 202B (as shown in FIG. 2B). The utilization of the two control circuitry, where one of the control circuitry 214A is coupled to the first image capturing module 118A and the other control circuitry 214B is coupled to the second image capturing module 118B corresponds to a decentralized coupling. Further, the control circuitry 214A and 214B generate the image data of the right rearward view and the left rearward view being captured by the first image capturing module 118A and the second image capturing module 118B, respectively.

Further, the at least one display interface 116 (or the first display interface 202A and the second display interface 202B) is oriented in a field of vision of a driver *(see,* 224) of the vehicle 100. This provides better visualization of the surrounding environment (*e.g*., the left rearward view and the right rearward view) of the vehicle 100 to the driver 224 of the vehicle 100. In an embodiment, the assembly of the mounting bracket 204 and the first display interface 202A and the assembly of the mounting bracket 204 and the second display interface 202B may be provided with adjustability features (*e.g*., horizontal adjustment or telescopic adjustment or 360 degrees adjustment) for allowing the driver 224 to adjust based on his/her preferences for better visualization.

Further, the at least one display interface 116 housed within the cabin 102 prevents exposure to the environmental conditions (such as dust, moisture, etc.). In addition, as the at least one display interface 116 is mounted to the A-pillar structures (or the support structures 112) of the vehicle 100 ensures efficient usage of space inside the cabin 102 and ensures the assembly feasibility.

In an embodiment, the at least one display interface 116 may include one display interface mounted to a dashboard of the vehicle 100, the right support structure 208A, the left support structure 208B, or any other suitable location inside the cabin 102. In this scenario, the control circuitry 214 may render the image data of the surrounding environment (*e.g*., right rearward view, left rearward view, rear view, etc.) of the vehicle 100 on the single display interface *(i.e.,* the at least one display interface 112).

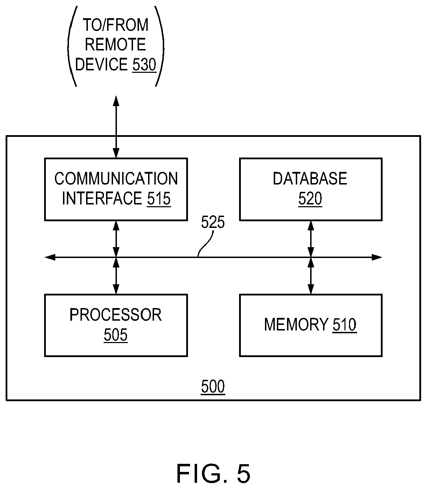

FIG. 5 illustrates a simplified block diagram representation of a control circuitry 500, in accordance with an embodiment of the present disclosure. The control circuitry 500 is an example of the control circuitry 214. The control circuitry 500 includes at least one processor 505, a memory 510, a communication interface 515, and a database 520. The one or more components of the control circuitry 500 communicate with each other via a bus 525. It is noted that the control circuitry 500 as illustrated and hereinafter described is merely illustrative of an apparatus that could benefit from embodiments of the present disclosure and, therefore, should not be taken to limit the scope of the present disclosure. It is noted that the control circuitry 500 may include fewer or more components than those depicted in FIG. 5.

The processor 505 includes suitable logic, circuitry, and/or interfaces to execute computer-readable instructions. Examples of the processor 505 include, but are not limited to, an application-specific integrated circuit (ASIC) processor, a reduced instruction set computing (RISC) processor, a complex instruction set computing (CISC) processor, a field-programmable gate array (FPGA), and the like. The memory 510 includes suitable logic, circuitry, and/or interfaces to store a set of computer-readable instructions for performing operations. Examples of the memory 510 include a random-access memory (RAM), a read-only memory (ROM), a removable storage drive, a hard disk drive (HDD), and the like. It will be apparent to a person skilled in the art that the scope of the disclosure is not limited to realizing the memory 510 in the control circuitry 500, as described herein. In some embodiments, the memory 510 may be realized in the form of a database server or cloud storage working in conjunction with the control circuitry 500, without deviating from the scope of the present disclosure.

The processor 505 is operatively coupled to the communication interface 515 and is capable of communicating with a remote device 530 such as one or more components of the electronic components of the vehicle 100 such as the image capturing modules 118, the at least one display interface 116, etc. The communication interface 515 may include communication circuitry such as for example, a transceiver circuitry including an antenna and other communication media interfaces to connect to a wired and/or wireless communication network. The communication circuitry may, in at least some example embodiments, enable the transmission of data signals or control signals or receipt of the user inputs.

The processor 505 is configured to generate the image data of the right rearward view and the left rearward view being captured by the first image capturing module 118A and the second image capturing module 118B. Thereafter, the processor 505 renders the image data of the right rearward view and the left rearward view of the surrounding environment on the first display interface 202A and the second display interface 202B, respectively, in real-time. In addition, the processor 505 may store the real-time image data in the database 520. In an embodiment, the control circuitry 500 may include one or more hard disk drives as the database 520 for storing the image data of the surrounding environment of the vehicle 100 being captured by the at least one image capturing module 118. Further, the one or more operations performed by the control circuitry 500 are already explained with references to FIGS. 1 to 4, and therefore they are not reiterated herein for the sake of brevity.

Various embodiments of the disclosure, as discussed above, may be practiced with steps and/or operations in a different order, and/or with hardware elements in configurations, which are different than those which are disclosed. Therefore, although the disclosure has been described based on these exemplary embodiments, it is noted that certain modifications, variations, and alternative constructions may be apparent and well within the scope of the disclosure.

Although various exemplary embodiments of the disclosure are described herein in a language specific to structural features and/or methodological acts, the subject matter defined in the appended claims is not necessarily limited to the specific features or acts described above. Rather, the specific features and acts described above are disclosed as exemplary forms of implementing the claims.

### Reference numeral list

vehicle 100
vehicle cabin 102
trailer 104
body frame 106
front wheels 108
rear wheels 110
support structures 112
vision system 114
at least one display interface 116
at least one image capturing module 118
first image capturing module 118A
second image capturing module 118B
one or more side walls 120
right side wall 120A
left side wall 120B
exterior portion 122
middle portion 124
shield member 126
windshield 128
power source 130
cross-sectional axis A-A'
vertical plane V-V'
first display interface 202A
second display interface 202B
mounting bracket 204
interior portion 206
right support structure 208A
left support structure 208B
one or more fastening members 210
front portion 212
control circuitry 214
interior portion 216
exterior portion 218
one or more conductive interfaces 220
driver seat 222
driver 224
field of view FOV1, FOV2
control circuitry 214A
control circuitry 214B
slot 302
at least one slot 304
sealant material 306
lower end 402
control circuitry 500
at least one processor 505
memory 510
communication interface 515
database 520
bus 525
remote device 530

## Claims

1. A vision system (114) for a vehicle (100), comprising:
at least one image capturing module (118) mounted at one or more locations of a body frame (106) of the vehicle (100);
a mounting bracket (204) mounted to an interior portion (206) of at least one support structure (112) located at a front portion (212) of the vehicle (100);
at least one display interface (116) removably mounted to the mounting bracket (204), wherein the at least one display interface (116) is located inside of the vehicle (100) and oriented in a field of vision of a driver (224) of the vehicle (100); and
a control circuitry (214) communicably coupled to the at least one display interface (116) and the at least one image capturing module (118), wherein the control circuitry (214) configured to render image data captured by the at least one image capturing module (118) of the vehicle (100) on the at least one display interface (116) in real-time.

2. The vision system (114) as claimed in claim 1, wherein the at least one support structure (112) located at the front portion (212) of the vehicle (100) comprises an A-pillar structure, the A-pillar structure extending obliquely in a rearward and upward direction from the body frame (106) of the vehicle (100).

3. The vision system (114) as claimed in claims 1 or 2, further comprising a shield member (126) mounted to the at least one support structure (112) and located outwardly in the vehicle (100), thereby encasing an exterior portion (218) of the at least one support structure (112) and the at least one display interface (116) secured to the mounting bracket (204).

4. The vision system (114) as claimed in any one of the claims 1 to 3, wherein the at least one display interface (116) is located at a lower end (402) of the at least one support structure (112).

5. The vision system (114) as claimed in any of the preceding claims, wherein the mounting bracket (204) is a structural element of the at least one support structure (112) of the vehicle (100),

6. The vision system (114) as claimed in any of the preceding claims, wherein the mounting bracket (204) is at least partly covering back portion of the at least one display interface (116).

7. The vision system (114) as claimed in claim 1, wherein the one or more locations of the body frame (106) for mounting the at least one image capturing module (118) comprise:
a right side wall (120A) at the front portion (212);
a left side wall (120B) at the front portion (212); and
the at least one support structure (112).

8. The vision system (114) as claimed in claims 1 or 6, wherein the control circuitry (214) of the vision system (114) is secured to at least one of: an interior portion (216) of the one or more side walls (122) of the body frame (106); and the at least one support structure (112).

9. The vision system (114) as claimed in any one of the preceding claims, wherein the at least one support structure (112) comprises an A-pillar structure, a B-pillar structure, a C-pillar structure, a roof, and a door.

10. The vision system (114) as claimed in any one of the preceding claims, wherein the at least one image capturing module (118) comprises a first image capturing module (118A) and a second image capturing module (118B), the first image capturing module (118A) and the second image capturing module (118A) mounted to the exterior portion (122) of the right side wall (120A) and the left side wall (120B), respectively, and wherein the first image capturing module (118A) and the second image capturing module (118B) are configured to capture the image data of a right rearward view and a left rearward view, respectively, of the surrounding environment of the vehicle (100).

11. The vision system (114) as claimed in claims 1 or 9, wherein the at least one display interface (116) comprises a first display interface (202A) and a second display interface (202B) secured to the mounting bracket (204), and wherein an assembly of the mounting bracket (204) and the first display interface (202A) is mounted to a right support structure (208A) of the at least one support structure (112) from the outside of the vehicle (100), and an assembly of the mounting bracket (204) and the second display interface (202B) is mounted to a left support structure (208B) of the at least one support structure (112) from the outside of the vehicle (100).

12. The vision system (114) as claimed in any one of claims 1, 9, and 10, wherein the control circuitry (214) is configured to at least render the image data of the right rearward view and the left rearward view of the surrounding environment of the vehicle (100) on the first display interface (202A) and the second display interface (202B), respectively.

13. The vision system (114) as claimed in any one of claims 1, 10, and 11, wherein the at least one display interface (116) is connected to the at least one image capturing module (118) and the control circuitry (214) via one or more conductive interfaces (220) routed through at least one slot (304) configured in the mounting bracket (204).

14. The vision system (114) as claimed in claim 12, wherein the at least one slot (304) of the mounting bracket (204) is sealed using a sealant material (306) to form a fluid sealed connection.

15. The vision system (114) as claimed in claim 1, wherein the at least one display interface (116) secured to the mounting bracket (204) is mounted to the interior portion (206) of the at least one support structure (112) using one or more fastening members (210), wherein the one or more fastening members (210) are insertable through a corresponding slot (302) through outside of the vehicle (100) and removably secured to the mounting bracket (204).
